# FASCICULE DE BREVET EUROPEEN

(11) **EP 3 314 789 B1**
(45) Date de publication et mention de la délivrance du brevet: **19.06.2019**
(21) Numéro de dépôt: 16750879.5
(22) Date de dépôt: 24.06.2016
(51) Int. Cl.: H04B 10/116

(54) **DISPOSITIF DE RÉCEPTION PHOTOVOLTAÏQUE AVEC GESTION DE LA POLARISATION POUR AUGMENTER LE DÉBIT D'UNE COMMUNICATION OPTIQUE**
FOTOVOLTAISCHE EMPFÄNGERVORRICHTUNG MIT POLARISATIONSVERWALTUNG ZUR ERHÖHUNG DER BANDBREITE EINER OPTISCHER ÜBERTRAGUNG
PHOTOVOLTAIC RECEIVER DEVICE WITH POLARISATION MANAGEMENT IN ORDER TO INCREASE THE BANDWIDTH OF AN OPTICAL COMMUNICATION

(30) Priorité: 24.06.2015 FR 1501307
(43) Date de publication de la demande: 02.05.2018
(73) Titulaire: Sunpartner Technologies, 13790 Rousset (FR)
(72) Inventeur: BIALIC, Emilie, F-13790 Rousset (FR)
(74) Mandataire: Nicolle, Olivier
(86) Numéro de dépôt international: PCT/FR2016/000108
(87) Numéro de publication internationale: WO 2016/207500

(56) Documents cités:
- FR-A1- 3 013 923
- US-A1- 2014 266 313
- Emilie Dr ET AL: "Wysips Connect, the first solution for the indoor/outdoor VLC lighting saturation problematics", , 26 février 2015 (2015-02-26), XP055265604, Extrait de l'Internet: URL:http://sunpartnertechnologies.com/wp-c ontent/uploads/2012/08/White_Paper_LiFi_26 _02_2015.pdf [extrait le 2016-04-14]

## Description

### Domaine technique de l'invention

La présente invention se rapporte aux dispositifs de communication par lumière visible et invisible (infrarouge et ultraviolette) de type VLC (acronyme pour « Visible Light Communication »), et plus particulièrement à des modules de réception photovoltaïques polarisés de telle sorte que le débit de la communication soit optimisé.

### Etat de la technique

Les dispositifs de communication par la lumière visible (VLC ou LiFi) ou par lumière invisible utilisent la lumière pour transmettre une information entre deux points distants. En particulier, les systèmes de communication par la lumière visible comprennent en général une diode électroluminescente (communément désignée par son acronyme anglais « LED ») ou un module comprenant une LED comme moyen d'émission, et un photodétecteur comme moyen de réception.

Les LED émettent un flux lumineux avec un spectre d'émission caractéristique, différent du spectre de la lumière naturelle. Les flux lumineux étant mesurés en Lux, on notera Lux LiFi le flux lumineux modulé émis par une LED. Le Lux LiFi est donc l'unité de mesure du flux lumineux spécifiant le niveau en Lux mesuré à partir d'un luxmètre lorsque la lumière utilisée est modulée et générée par des LEDs.

On définit alors plusieurs niveaux d'éclairement qui seront réutilisés dans la suite de ce document :
- On entend par « faible flux LiFi » émis par une LED, un flux lumineux inférieur à 200 Lux LiFi.
- On entend par « flux LiFi moyen » émis par une LED, un flux lumineux compris entre 200 et 10 000 Lux LiFi.
- On entend par « fort flux LiFi » émis par une LED, un flux lumineux supérieur à 10 000 Lux LiFi.

Dans le cadre des communications LiFi, la LED fournit un signal lumineux dans les gammes de longueur d'onde visible, infrarouge (IR) et ultraviolette (UV) dont l'intensité est modulée en fonction de l'information à transmettre. En particulier, dans le spectre du visible, les luminaires à LED ont l'avantage de permettre une double fonction à la fois d'éclairage et de transmission de données. Leurs caractéristiques physiques permettent d'envisager des débits de l'ordre du gigabit par seconde pour des systèmes dédiés. Cette LED peut être constituée d'une unique puce bleue recouverte d'un luminophore pour permettre un éclairage blanc, ou être constituée de plusieurs puces émettant des couleurs différentes (RGYB par exemple).

Un tel système de communication LiFi est avantageux en ce qu'on peut utiliser comme moyen de réception la plupart des photodétecteurs existants associés à un système de traitement de l'information permettant d'analyser la variation de l'amplitude du signal lumineux reçu et d'en déduire l'information transmise. En particulier, la plupart des surfaces photovoltaïques sont des photodétecteurs qui restituent les variations du signal optique en variations du signal électrique.

Ainsi, on connait de par le document US 2014/266313 A1 un récepteur lumineux destiné à détecter des variations de lumière ambiante. Ce récepteur comporte une photodiode et un circuit de traitement du signal analogique délivré par la photodiode, afin de détecter le passage de l'intensité lumineuse au-dessus ou en-dessous de certains seuils. Mais ce récepteur lumineux est dépourvu de tout convertisseur analogique/numérique. Il ne comporte pas non plus de circuit pour piloter une tension de polarisation vers une tension de seuil pour augmenter le rapport signal/bruit ou le débit d'une communication LiFi.

Le document US2014/0266313 A1 divulgue un récepteur lumineux également destiné à détecter des variations de lumière ambiante, comprenant un circuit pour garder une tension de polarisation en dessous d'une tension de détection quelque soit le niveau de lumière ambiante.

De manière générale, les systèmes de réception LiFi reçoivent les lumières issues de toutes les directions de l'espace sans distinction, qu'il s'agisse de la lumière ambiante ou de la lumière modulée émise par un émetteur LiFi.

Afin d'optimiser le débit de communication LiFi dans un environnement comportant d'autres sources lumineuses, un problème technique se pose. En effet, il est nécessaire de pouvoir discriminer la lumière issue des LED LiFi des autres sources de lumière, afin d'augmenter le rapport signal/bruit du signal LiFi, et par voie de conséquence, le débit de transmission.

La plupart des photorécepteurs (non photovoltaïques) connus sont très sensibles à la lumière ambiante, et saturent rapidement en présence d'un fort flux lumineux ambiant. De ce fait, ils ne permettent plus de retranscrire la variation de l'intensité lumineuse du signal LiFi, lorsque la saturation s'installe. Néanmoins, ces photorécepteurs connus sont souvent de très bons récepteurs tant que le flux LiFi n'est pas trop élevé (<5000 Lux).

Par ailleurs, on s'est rendu compte que certains modules photovoltaïques, qui sont en premier lieu conçus pour générer une tension électrique significative à partir d'un rayonnement lumineux, permettent en fait de réceptionner un signal LiFi à fort flux LiFi, même dans un environnement à fort flux lumineux ambiant, et cela sans que le phénomène de saturation précité ne s'installe. Ainsi, lesdits modules photovoltaïques sont capables de réceptionner un signal LiFi issu d'une source LiFi placée à l'extérieur sans engendrer de perturbation au niveau de la réception, contrairement aux autres photorécepteurs.

Mais il n'existe pas dans l'état de la technique de photorécepteur ou de système de photoréception capable de fonctionner simultanément dans des environnements variés tels que ceux décrits ci-dessous :
- Réception d'un faible flux LiFi en environnement intérieur (< 500 Lux de lumière ambiante) ;
- Réception d'un faible flux LiFi (< 200 lux LiFi) en environnement extérieur lumineux (< 300000 Lux de lumière ambiante) ;
- Réception d'un fort flux LiFi avec un photorécepteur positionné à proximité immédiate d'une lampe, dans n'importe quel environnement.

Le système proposé dans le cadre de la présente invention vise à résoudre cette problématique, en proposant un dispositif de photodétection LiFi capable de fonctionner de manière efficace dans une multitude de cas de figure, notamment dans les trois cas précédemment cités.

### But de l'invention

L'invention vise à proposer un dispositif de réception de type VLC capable de fonctionner avec un débit de communication plus élevé et/ou une portée plus élevée que les systèmes connus, et ce dans tout type d'environnement intérieur ou extérieur, aussi bien en environnement à faible flux LiFi ou à fort flux LiFi, et que la lumière ambiante soit faible ou forte.

### Objets de l'invention

L'objet de l'invention concerne un dispositif de communication sans fil basée sur la lumière visible ou invisible, ainsi qu'un procédé d'optimisation du rapport signal sur bruit et du débit de la communication.

L'invention a notamment pour objet un dispositif de communication sans fil utilisant la lumière, comprenant au moins :
- une source de lumière émettant un signal lumineux modulé;
- un module photovoltaïque apte à recevoir ledit signal lumineux modulé;
- un convertisseur analogique/numérique connecté électriquement aux bornes de sortie dudit module photovoltaïque permettant de convertir le signal analogique délivré par le module photovoltaïque en un signal numérique ;
- caractérisé en ce qu'il comporte en outre un moyen de polarisation dudit module photovoltaïque apte à générer une tension de polarisation (Vₚ) appliquée aux bornes dudit module photovoltaïque, et un module de gestion recevant en entrée le signal numérique délivré par ledit convertisseur analogique/numérique pour optimiser ladite tension de polarisation (Vₚ) vers une tension de seuil (Vₛ) correspondant à un rapport signal sur bruit (SNR) et un débit de communication améliorés.

Selon un mode de réalisation, ledit moyen de polarisation dudit module photovoltaïque est constitué par un générateur de tension apte à générer une tension aux bornes du module photovoltaïque, ladite tension étant équivalente à celle générée par un éclairage complémentaire non modulé, distinct du signal lumineux modulé.

Selon un autre mode de réalisation, ledit moyen de polarisation dudit module photovoltaïque est composé d'au moins une source de lumière continue complémentaire et distincte du signal lumineux modulé, ladite lumière continue éclairant également la surface active dudit module photovoltaïque de manière à créer une tension de polarisation (Vₚ) contrôlée par ledit module de gestion. Dans ce cas, ladite lumière continue est de préférence guidée dans une plaque transparente qui est positionnée au-dessus de la surface active du module photovoltaïque de manière à ce que ladite lumière continue atteigne la surface active du module photovoltaïque.

Avantageusement, ledit module photovoltaïque ou la source de lumière modulée ou la plaque transparente ou la source de lumière continue comportent en outre un système optique de type lentille, filtre spectral ou filtre à polarisation.

Le module photovoltaïque est de préférence semi-transparent, composé d'une pluralité de zones actives photovoltaïques opaques espacées par des zones de transparence. Il est constitué d'une cellule photovoltaïque unique ou d'une pluralité de cellules photovoltaïques connectées électriquement en série ou en parallèle.

Le dispositif selon l'invention comporte en outre un module de traitement du signal relié à la sortie du convertisseur analogique/numérique. Celui-ci peut comporter son propre convertisseur analogique numérique.

Selon l'invention, le module de gestion est configuré pour définir par itérations successives la valeur de la tension de polarisation optimale (Vₛ) correspondant au meilleur rapport signal sur bruit de la communication. A cet effet, ledit module de gestion comporte un programme de traitement prenant en compte en temps réel le signal de sortie du convertisseur analogique - numérique et la valeur de la tension correspondant à l'éclairage complémentaire non modulé.

L'invention a également pour objet un procédé d'optimisation du rapport signal sur bruit et du débit de communication d'un dispositif de communication tel que décrit plus haut, caractérisé en ce qu'il comporte des étapes consistant à :
1) Initialiser le système par :
   a. Une mesure du niveau de signal aux bornes du module photovoltaïque (DC_ini)
   b. Une mesure du rapport signal sur bruit de référence (SNR_ref)
   c. Le choix d'une tension de polarisation maximale admissible
2) Adapter la polarisation du module photovoltaïque en :
   a) augmentant la tension de polarisation (Vₚ) ;
   b) mesurant le rapport signal sur bruit (SNR_mes), ledit rapport signal sur bruit mesuré (SNR_mes) étant comparé avec le rapport signal sur bruit de référence (SNR_ref) ;
   c) Si SNR_ref ≤ SNR_mes alors SNR_mes = SNR_ref et retourner à l'étape 2) a) ;
   d) Si SNR_ref > SNR_mes, on polarise le module avec la valeur précédente de polarisation, qui correspond à la valeur optimale (Vₛ).

### Figures

L'invention sera mieux comprise à l'aide de sa description détaillée, en relation avec les figures, dans lesquelles :
- la figure 1 est un schéma de principe du dispositif de réception objet de l'invention ;
- la figure 2 représente le rapport signal sur bruit de la communication, en fonction de la fréquence et pour deux configurations particulières dudit dispositif ;
- La figure 3 représente une variante dudit dispositif permettant d'adapter la tension de polarisation électrique à partir d'un système d'éclairage disposé en face avant du module photovoltaïque.

### Description détaillée

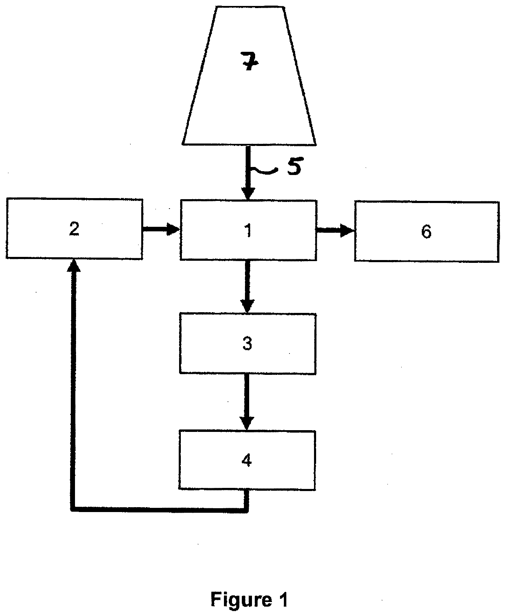

On se réfère à la figure 1, qui est un schéma de principe du dispositif de réception objet de l'invention. Le module **1** est un module photovoltaïque, de préférence semi-transparent. Il est alors composé d'une pluralité de zones actives photovoltaïques opaques espacées par des zones de transparence. Il est éclairé par un émetteur LiFi **7** émettant un signal lumineux modulé **5.** Un convertisseur analogique/numérique **3** connecté électriquement audit module photovoltaïque **1** permet de convertir le signal analogique délivré par le module photovoltaïque **1** en un signal numérique. Un module de traitement **4** reçoit en entrée le signal numérique issu du convertisseur analogique/numérique **3**. Il est relié à un capteur (non représenté) permettant de mesurer la lumière ambiante continue, c'est-à-dire non modulée. En plus de la lumière ambiante naturelle, on peut utiliser une source de lumière continue pour générer par effet photovoltaïque une tension de polarisation Vₚ. On appelle « source de lumière continue » une source lumineuse non modulée en amplitude, par opposition à la lumière modulée porteuse d'une information dans la communication par lumière visible. Il peut s'agir par exemple d'une LED.

Le module de traitement **4** comporte un microprocesseur exécutant un programme itératif qui permet d'identifier la valeur nominale optimale Vₛ de la tension de polarisation Vₚ, en fonction du signal lumineux modulé **5** et de l'environnement lumineux ambiant. Il contrôle le moyen de polarisation **2** dudit module photovoltaïque **1**, permettant d'atteindre une tension de polarisation **Vₚ** appliquée aux bornes dudit module photovoltaïque **1**. Un module de traitement du signal modulé **6** peut alors traiter l'information numérique et optimiser le débit reçu, de façon connue en soi. Ce module de traitement du signal **6** est soit connecté en sortie du convertisseur analogique numérique **3** s'il ne comporte pas son propre convertisseur, soit connecté aux bornes du module photovoltaïque **1** (c'est le cas représenté) s'il comporte en entrée son propre convertisseur analogique numérique.

De préférence, le module photovoltaïque **1** semi-transparent est composé d'une pluralité de zones actives photovoltaïques opaques espacées par des zones de transparence. Un tel module photovoltaïque est généralement composé d'au moins trois couches minces dont une électrode transparente, une couche d'absorbeur et une électrode métallique. L'électrode transparente peut être constituée de graphène, de nanostructures métalliques ou encore d'un oxyde conducteur transparent tel que le FTO, l'ITO, l'IZO, l'AZO, le BZO, le GZO ou le ZnO. L'électrode métallique est formée d'un métal tel que l'aluminium (Al), le nickel (Ni), l'or (Au), l'argent (Ag), le cuivre (Cu), le molybdène (Mo), le chrome (Cr), le titane (Ti) ou le palladium (Pd). La couche d'absorbeur est composée d'un ou plusieurs matériaux semi-conducteurs inorganiques et/ou organiques, par exemple à base de silicium amorphe ou microcristallin, de GaAs (arséniure de gallium), de CdTe (tellurure de cadmium), de CIGS (cuivre - indium - gallium - sélénium) ou à base de polymères. Il peut s'agir de jonctions de type p-i-n ou p-n, ou encore d'architectures tandem, c'est-à-dire comportant plusieurs couches de matériaux qui absorbent préférentiellement une partie différente du spectre lumineux. Elles peuvent être conçues pour convertir la lumière visible et/ou la lumière ultra-violette et/ou la lumière infrarouge en électricité. Avantageusement, le choix des matériaux semi-conducteurs est réalisé pour maximiser la capture des photons dans les conditions d'éclairement visées.

Afin d'assurer un bon degré de transparence audit module photovoltaïque **1,** celui-ci comporte de préférence des zones de transparence aménagées dans les couches de l'absorbeur et de l'électrode métallique, de manière qu'un observateur situé devant le substrat puisse voir au travers dudit module photovoltaïque. Ces zones de transparence sont donc configurées pour laisser subsister entre elles des zones actives photovoltaïques. La transparence du module photovoltaïque est fonction de la fraction surfacique occupée par les zones actives photovoltaïques opaques. Dans un mode de réalisation avantageux, les zones de transparence sont aménagées dans l'électrode transparente en plus de l'électrode métallique et de la couche d'absorbeur, afin d'augmenter la transmission de la lumière au niveau des zones de transparence, puisqu'en réduisant le nombre d'interfaces, on minimise les phénomènes optiques de réflexions aux interfaces. Les zones actives photovoltaïques peuvent être de formes quelconques et préférentiellement de dimensions telles que l'oeil humain ne les distingue pas. Pour ce faire, la largeur des zones photovoltaïques est de préférence inférieure à 200 micromètres. Les zones actives photovoltaïques ou les zones de transparence peuvent être organisées en réseaux de structures géométriques élémentaires, linéaires, circulaires ou polygonales.

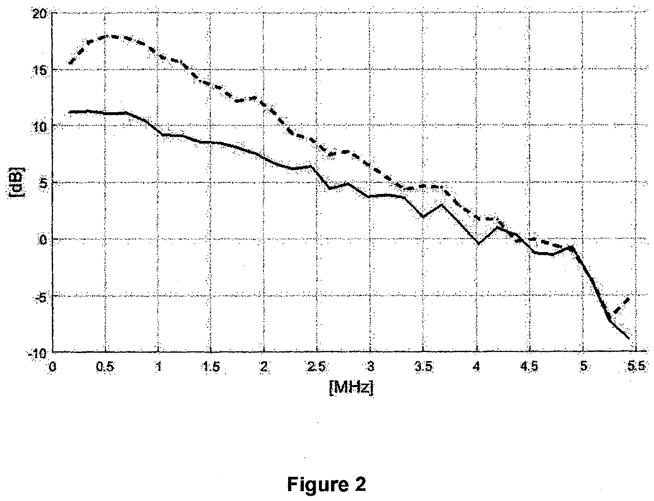

La figure 2 représente la valeur du rapport signal sur bruit (SNR) en sortie du module photovoltaïque 1, en fonction de la fréquence, et pour deux configurations particulières d'environnement lumineux. La première configuration correspond au graphique en trait plein. Il s'agit d'une mesure du rapport signal sur bruit du signal de sortie d'un module photovoltaïque **1** semi-transparent, pour un signal lumineux modulé **5** de 9000 Lux émis par une diode électroluminescente (LED) **7** dans un environnement lumineux ambiant de 80 Lux.

La seconde configuration, représentée sur le graphique par un trait pointillé, est une mesure du rapport signal sur bruit du même module photovoltaïque **1** pour un même signal lumineux modulé **5** de 9000 Lux, mais dans un environnement ambiant de 41 000 Lux obtenus à partir d'un spot de LED puissant. Cette figure montre que, de façon surprenante, le rapport SNR est meilleur dans la seconde configuration présentant un « bruit » lumineux plus important. En conséquence, le débit de communication peut être meilleur lorsque le module photovoltaïque **1** semi-transparent est placé dans un environnement lumineux ambiant présentant une l'intensité lumineuse optimale, de préférence commandée en temps réel pour générer à l'aide du moyen de polarisation **2**, une tension de polarisation Vₚ. L'intensité lumineuse continue optimale correspond à une tension de polarisation optimale ou tension de seuil Vₛ. En outre, l'invention prévoit que cette intensité lumineuse optimale dépend de la valeur du signal émis par la source **7** de lumière modulée.

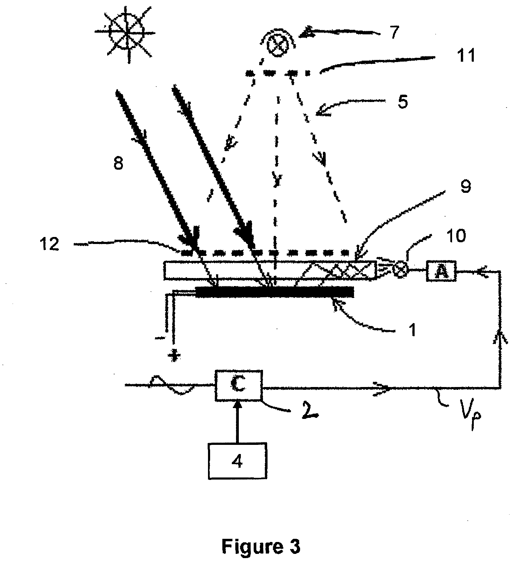

La figure 3 décrit un exemple de mode réalisation du dispositif selon l'invention, permettant de faire varier la tension de polarisation électrique du module photovoltaïque **1**, en fonction du signal numérique délivré en sortie du convertisseur analogique-numérique **3** et de la luminosité ambiante. Cette solution consiste à éclairer ledit module photovoltaïque **1** avec une source de lumière non modulée secondaire **10** dont l'intensité **A** est contrôlée **C** par le module de gestion **4** pour s'adapter en fonction de la lumière ambiante **8** et du signal lumineux modulé **5**.

Il est judicieux de pouvoir rendre ce dispositif d'éclairage secondaire **10** transparent et pour cela de positionner une plaque transparente guide d'ondes **9** en face avant du module photovoltaïque **1**, c'est-à-dire entre ledit module **1** et la source **7** de lumière modulée **5**. Ladite plaque transparente **9** est structurée optiquement et permet de guider la lumière secondaire **10** dans son épaisseur et de la faire ressortir de préférence vers la face active du module photovoltaïque **1**. L'avantage d'un tel dispositif est qu'il peut contenir en outre un ou plusieurs systèmes optiques (**11,12**) de type lentilles ou polariseurs, qui permettent de diminuer l'intensité de la lumière ambiante **8** lorsque celle-ci est trop importante par rapport à l'intensité de la lumière modulée **5**.

### Avantages de l'invention

En définitive l'invention répond bien aux buts fixés en permettant d'utiliser le module photovoltaïque dédié par exemple à la gestion des forts flux lorsque le flux LiFi est faible en polarisant de manière adéquate ledit module avec de la lumière non modulée. L'invention permet de gérer automatiquement et en temps réel les différentes configurations d'environnement lumineux en adaptant le dispositif de manière à optimiser le débit de données reçues.

### Exemple de réalisation

Une expérience a été réalisée à partir d'un module photovoltaïque semi-transparent (dont la tension en circuit ouvert et sous 400 lux est égale à 10 mV) intégré dans un écran de téléphone, ledit téléphone étant doté d'une application permettant de charger à partir du module photovoltaïque et de jouer le contenu multimédia associé à l'adresse indiquée par le signal lumineux modulé. En effet, le signal lumineux modulé est émis par une lampe LED envoyant un identifiant de type « Manchester asymétrique » connu de l'homme du métier.

Le téléphone déclenche ledit contenu multimédia jusqu'à 25 cm de la lampe, c'est-à-dire pour des valeurs supérieures à 23 500 Lux de la lampe LED. Lorsque l'on éloigne le téléphone de la lampe, le signal lumineux modulé reçu par le module photovoltaïque n'est plus suffisant pour être décodé par l'application. Pour pallier à ce problème et ainsi augmenter la portée du signal lumineux modulé, il suffit d'éclairer la surface du téléphone avec une lampe torche à flux non modulé (test réalisé pour des lampes torches à LEDs blanche et UV/bleu profond). Ainsi, de façon surprenante, en ajoutant au signal LiFi une lumière ambiante dont l'intensité n'est pas modulée, l'application fonctionne jusqu'à une distance de 57cm, soit un signal lumineux modulé d'intensité 5300 Lux. On multiplie donc la portée par un facteur 2 grâce à l'éclairage du module photovoltaïque par une lumière non modulée. Autrement dit, on réduit l'intensité lumineuse globale (modulée et non modulée) nécessaire à la détection du signal, qui est égale à 9500 Lux dans cet exemple. Il est à noter que la somme des intensités lumineuses modulée et non modulée prises séparément n'est a priori pas égale du point de vue du récepteur photovoltaïque objet de l'invention à la somme des intensités lumineuses des deux sources allumées simultanément.

## Revendications

1. Dispositif de communication sans fil utilisant la lumière, comprenant au moins :
- une source (7) de lumière émettant un signal lumineux modulé (5) ;
- un module photovoltaïque (1) apte à recevoir ledit signal lumineux modulé (5);
- un convertisseur analogique/numérique (3) connecté électriquement aux bornes- de sortie dudit module photovoltaïque (1), permettant de convertir le signal analogique délivré par le module photovoltaïque (1) en un signal numérique;
- un moyen de polarisation (2) dudit module photovoltaïque (1) apte à générer une tension de polarisation (Vₚ) appliquée aux bornes dudit module photovoltaïque (1),
- et un module de gestion (4) recevant en entrée le signal numérique délivré par ledit convertisseur analogique/numérique (3) pour optimiser ladite tension de polarisation (Vₚ) vers une tension de seuil (Vₛ) correspondant à un rapport signal sur bruit (SNR) et un débit de communication améliorés, **caractérisé en ce que** ledit moyen de polarisation (2) dudit module photovoltaïque (1) est composé d'au moins une source de lumière continue (10) complémentaire et distincte du signal lumineux modulé (5), ladite lumière continue (10) éclairant également la surface active dudit module photovoltaïque (1) de manière à créer une tension de polarisation (Vₚ) contrôlée par ledit module de gestion (4).

2. Dispositif de communication selon la revendication 1, **caractérisé en ce que** ledit moyen de polarisation (2) dudit module photovoltaïque (1) est constitué par un générateur de tension apte à générer une tension électrique aux bornes du module photovoltaïque, ladite tension étant équivalente à celle générée par un l'éclairage complémentaire non modulé, distinct du signal lumineux modulé (5).

3. Dispositif de communication selon la revendication 2, **caractérisé en ce que** ladite lumière continue est guidée dans une plaque transparente (9) qui est positionnée au-dessus de la surface active du module photovoltaïque (1) de manière à ce que ladite lumière continue atteigne la surface active du module photovoltaïque (1).

4. Dispositif de communication selon l'une quelconque des revendications précédentes, **caractérisé en ce que** ledit module photovoltaïque (1) ou la source (7) de lumière modulée (5) ou la plaque transparente (9) ou la source de lumière continue (10) comportent en outre un système optique (11,12) de type lentille, filtre spectral ou filtre à polarisation.

5. Dispositif de communication selon l'une quelconque des revendications précédentes, **caractérisé en ce que** ledit module photovoltaïque (1) est semi-transparent, composé d'une pluralité de zones actives photovoltaïques opaques espacées par des zones de transparence.

6. Dispositif de communication selon l'une quelconque des revendications précédentes, **caractérisé en ce que** ledit module photovoltaïque (1) est constitué d'une cellule photovoltaïque unique ou d'une pluralité de cellules photovoltaïques connectées électriquement en série ou en parallèle.

7. Dispositif de communication selon l'une quelconque des revendications précédentes, **caractérisé en ce que** ledit module de gestion (4) est configuré pour définir par itérations successives la valeur de la tension de polarisation optimale (Vₛ) correspondant au meilleur rapport signal sur bruit ou au meilleur débit de la communication.

8. Dispositif de communication selon la revendication 7, **caractérisé en ce que** ledit module de gestion (4) comporte un programme de traitement prenant en compte en temps réel le signal de sortie du convertisseur analogique - numérique (3) et la valeur de la tension correspondant à l'éclairage complémentaire non modulé.

9. Procédé d'optimisation du rapport signal sur bruit et du débit de communication d'un dispositif de communication selon l'une quelconque des revendications précédentes, **caractérisé en ce qu'**il comporte des étapes consistant à :
1) Initialiser le système par :
a) Une mesure du niveau de signal aux bornes du module photovoltaïque (1) (DC_ini)
b) Une mesure du rapport signal sur bruit de référence (SNR_ref)
c) Le choix d'une tension de polarisation maximale admissible
2) Adapter la polarisation du module photovoltaïque en :
a) augmentant la tension de polarisation (Vₚ) ;
b) mesurant le rapport signal sur bruit (SNR_mes), et comparant ledit rapport signal sur bruit mesuré (SNR_mes) avec le rapport signal sur bruit de référence (SNR_ref) ;
c) Si SNR_ref ≤ SNR_mes alors SNR_mes = SNR_ref et retourner à l'étape 2)a) ;
d) Si SNR_ref > SNR_mes, on polarise le module avec la valeur précédente de polarisation, qui correspond à la valeur optimale (Vₛ).

## Patentansprüche

1. Vorrichtung zur drahtlosen Kommunikation unter Verwendung von Licht, umfassend mindestens:
- eine Lichtquelle (7), die ein moduliertes Lichtsignal (5) aussendet;
- ein Fotovoltaikmodul (1), das geeignet ist, das modulierte Lichtsignal (5) zu empfangen;
- einen Analog-Digital-Umsetzer (3), der elektrisch mit den Ausgangsklemmen des Fotovoltaikmoduls (1) verbunden ist, der es ermöglicht, das vom Fotovoltaikmodul (1) abgegebene analoge Signal in ein digitales Signal umzusetzen;
- ein Polarisationsmittel (2) des Fotovoltaikmoduls (1), das geeignet ist, eine Polarisationsspannung (Vₚ) zu erzeugen, die an die Klemmen des Fotovoltaikmoduls (1) angelegt wird,
- und ein Verwaltungsmodul (4), das im Eingang das vom Analog-Digital-Umsetzer (3) abgegebene digitale Signal empfängt, um die Polarisationsspannung (Vₚ) hin zu einer Schwellenspannung (Vₛ) zu optimieren, die einem verbesserten Störabstand (SNR) und einer verbesserten Kommunikationsrate entspricht, **dadurch gekennzeichnet, dass** das Polarisationsmittel (2) des Fotovoltaikmoduls (1) aus mindestens einer Quelle von Dauerlicht (10) besteht, das komplementär zum und verschieden vom modulierten Lichtsignal (5) ist, wobei das Dauerlicht (10) auch die aktive Fläche des Fotovoltaikmoduls (1) beleuchtet, so dass eine Polarisationsspannung (Vₚ) geschaffen wird, die vom Verwaltungsmodul (4) kontrolliert wird.

2. Kommunikationsvorrichtung nach Anspruch 1, **dadurch gekennzeichnet, dass** das Polarisationsmittel (2) des Fotovoltaikmoduls (1) aus einem Spannungsgenerator besteht, der geeignet ist, eine elektrische Spannung an den Klemmen des Fotovoltaikmoduls zu erzeugen, wobei die Spannung gleichwertig zu der ist, die von einer unmodulierten komplementären Beleuchtung, die verschieden vom modulierten Lichtsignal (5) ist, erzeugt wird.

3. Kommunikationsvorrichtung nach Anspruch 2, **dadurch gekennzeichnet, dass** das Dauerlicht in einer transparenten Platte (9) geführt wird, die oberhalb der aktiven Fläche des Fotovoltaikmoduls (1) angeordnet ist, so dass das Dauerlicht die aktive Fläche des Fotovoltaikmoduls (1) erreicht.

4. Kommunikationsvorrichtung nach einem der vorhergehenden Ansprüche, **dadurch gekennzeichnet, dass** das Fotovoltaikmodul (1) oder die Quelle (7) von moduliertem Lichts (5) oder die transparente Platte (9) oder die Quelle von Dauerlicht (10) ferner ein optisches System (11, 12) von der Art einer Liste, eines Spektralfilters oder eines Polarisationsfilters aufweisen.

5. Kommunikationsvorrichtung nach einem der vorhergehenden Ansprüche, **dadurch gekennzeichnet, dass** das Fotovoltaikmodul (1) halbtransparent ist, aus einer Vielzahl von undurchsichtigen aktiven Fotovoltaikbereichen besteht, die durch Transparenzbereiche beabstandet sind.

6. Kommunikationsvorrichtung nach einem der vorhergehenden Ansprüche, **dadurch gekennzeichnet, dass** das Fotovoltaikmodul (1) aus einer einzigen Fotovoltaikzelle oder aus einer Vielzahl von Fotovoltaikzellen, die elektrisch in Reihe oder parallel geschaltet sind, besteht.

7. Kommunikationsvorrichtung nach einem der vorhergehenden Ansprüche, **dadurch gekennzeichnet, dass** das Verwaltungsmodul (4) dazu ausgebildet ist, durch aufeinander folgende Iterationen den Wert der optimalen Polarisationsspannung (Vₛ) zu bestimmen, der dem besten Störabstand oder der besten Kommunikationsrate entspricht.

8. Kommunikationsvorrichtung nach Anspruch 7, **dadurch gekennzeichnet, dass** das Verwaltungsmodul (4) ein Verarbeitungsprogramm aufweist, das in Echtzeit das Ausgangssignal des Analog-Digital-Umsetzers (3) und den Wert der Spannung, welcher der komplementären unmodulierten Beleuchtung entspricht, berücksichtigt.

9. Verfahren zur Optimierung des Störabstands und der Kommunikationsrate einer Kommunikationsvorrichtung nach einem der vorhergehenden Ansprüche, **dadurch gekennzeichnet, dass** es Schritte umfasst, die in Folgendem bestehen:
1) Initialisieren des Systems durch:
a) Eine Messung des Signalpegels an den Klemmen des Fotovoltaikmoduls (1) (DC_ini)
b) Eine Messung des Referenz-Störabstands (SNR_ref)
c) Die Wahl einer höchstzulässigen Polarisationsspannung
2) Anpassen der Polarisation des Fotovoltaikmoduls durch:
a) Erhöhen der Polarisationsspannung (Vₚ);
b) Messen des Störabstands (SNR_mes) und Vergleichen des gemessenen Störabstands (SNR_mes) mit dem Referenz-Störabstand (SNR_ref);
c) wenn SNR_ref ≤ SNR_mes, dann SNR_mes = SNR_ref und Zurückkehren zu Schritt 2)a);
d) wenn SNR_ref > SNR_mes, wird das Modul mit dem vorhergehenden Polarisationswert polarisiert, der dem optimalen Wert entspricht (Vₛ).

## Claims

1. Wireless communication device using light, comprising at least:
- one light source (7) emitting a modulated light signal (5) ;
- one photovoltaic module (1) capable of receiving said modulated light signal (5);
- one analog/digital converter (3) electrically connected to the output terminals of said photovoltaic module (1), allowing the analog signal delivered by the photovoltaic module (1) to be converted into a digital signal;
- means (2) for polarizing said photovoltaic module (1) capable of generating a polarizing voltage (Vₚ) applied to the terminals of said photovoltaic module (1),
- and a management module (4) receiving as input the digital signal delivered by said analog/digital converter (3) to optimize said polarizing voltage (Vₚ) toward a threshold voltage (Vₛ) corresponding to an improved signal-to-noise ratio (SNR) and communication rate, **characterized in that** said means (2) for polarizing said photovoltaic module (1) are formed by at least one continuous light source (10) in addition to and distinct from the modulated light signal (5), said continuous light (10) also illuminating the active surface of said photovoltaic module (1) so as to create a polarizing voltage (Vₚ) controlled by said management module (4).

2. Communication device according to Claim 1, **characterized in that** said means (2) for polarizing said photovoltaic module (1) are formed by a voltage generator capable of generating an electric voltage on the terminals of the photovoltaic module, said voltage being equivalent to that generated by a non-modulated additional illumination, distinct from the modulated light signal (5).

3. Communication device according to Claim 2, **characterized in that** said continuous light is guided in a transparent plate (9) that is positioned above the active surface of the photovoltaic module (1) so that said continuous light reaches the active surface of the photovoltaic module (1).

4. Communication device according to any one of the preceding claims, **characterized in that** said photovoltaic module (1) or the source (7) of modulated light (5) or the transparent plate (9) or the source of continuous light (10) further comprise an optical system (11, 12) of lens, spectral filter or polarizing filter type.

5. Communication device according to any one of the preceding claims, **characterized in that** said photovoltaic module (1) is semi-transparent, made up of a plurality of opaque active photovoltaic zones separated by transparent zones.

6. Communication device according to any one of the preceding claims, **characterized in that** said photovoltaic module (1) is formed by a single photovoltaic cell or by a plurality of photovoltaic cells electrically connected in series or in parallel.

7. Communication device according to any one of the preceding claims, **characterized in that** said management module (4) is configured to define, by successive iterations, the value of the optimal polarizing voltage (Vₛ) corresponding to the best signal-to-noise ratio or to the best communication rate.

8. Communication device according to Claim 7, **characterized in that** said management module (4) comprises a processing program that considers, in real time, the output signal of the analog/digital converter (3) and the value of the voltage corresponding to the non-modulated additional illumination.

9. Method for optimizing the signal-to-noise ratio and the communication rate of a communication device according to any one of the preceding claims, **characterized in that** it comprises steps consisting in:
1) initializing the system by:
a) measuring the signal level at the terminals of the photovoltaic module (1) (DC_ini);
b) measuring the reference signal-to-noise ratio (SNR_ref);
c) selecting a maximum permissible polarizing voltage;
2) adapting the polarizing of the photovoltaic module by:
a) increasing the polarizing voltage (Vₚ);
b) measuring the signal-to-noise ratio (SNR_mes) and comparing said measured signal-to-noise ratio (SNR mes) with the reference signal-to-noise ratio (SNR_ref);
c) if SNR_ref ≤ SNR_mes, then SNR_mes = SNR_ref and return to step 2) a);
d) if SNR_ref > SNR_mes, the module is polarized with the preceding polarizing value, which corresponds to the optimal value (Vₛ).
